# EUROPEAN PATENT APPLICATION

(11) **EP 3 383 143 A1**
(43) Date of publication of application: **03.10.2018**
(21) Application number: 18162446.1
(22) Date of filing: 19.03.2018
(51) Int. Cl.: H05B 37/02, H05B 33/08

(54) **DIMMING SYSTEM WITH PLC MODULATOR AND DEMODULATOR**

(30) Priority: 31.03.2017 BE 201705226
(71) Applicant: Delta Light NV, 8560 Wevelgem (Moorsele) (BE)
(72) Inventor: AMELOOT, Paul, 8800 Roeselare (BE); AMELOOT, Peter, 8800 Roeselare (BE); VIAENE, Tim, 9890 Gavere (BE); MOERMAN, Toon, 8551 Heestert (BE)
(74) Representative: D'Halleweyn, Nele Veerle Trees Gertrudis

(57) **Abstract**

Dimming system comprising a PLC modulator configured to modulate dimming data onto a DC supply signal for the purpose of obtaining a modulated DC supply signal, wherein the dimming data are modulated onto the DC supply signal at a first frequency; a PLC demodulator configured to generate a pulse-width modulated signal on the basis of the modulated DC supply signal; wherein the PWM signal has a second frequency and the duty cycle is a function of the dimming data in the modulated supply signal; which second frequency is at least a factor of 2 greater than the first frequency; an LED driver configured to control one or more LEDs with an LED supply signal which is a function of the PWM signal; wherein the PLC demodulator is configured to sample the modulated DC supply signal at successive points in time which are correlated to the PWM signal for the purpose of obtaining successive measurement values which are representative of the modulated supply signal.

## Description

### Field of the invention

The field of the present invention relates to the dimming of LED lighting. The invention relates more particularly to a dimming system for LED lighting and to components for use in such a dimming system.

### Background

Dimming systems for LED lighting with power line communication (PLC) modulation of a dimming signal onto a supply signal are known.

An LED is preferably fed with a controllable constant current source. Provided for this purpose are LED drivers which convert a DC supply voltage into a constant current. When PLC modulation is used, a dimming signal is modulated onto the DC supply voltage on the supply side. On the LED side a PWM signal is determined on the basis of this modulated supply signal for the purpose of controlling the controllable constant current source of the LED driver. The dimming signal can for instance come from a DALI dimmer.

### Summary of the invention

Embodiments of the invention have the object of providing a dimming system for LED lighting which makes use of PLC modulation and demodulation and which is more robust and noise-resistant than the prior art systems.

A first aspect of the invention relates to a dimming system according to claim 1. The dimming system comprises a PLC modulator, a PLC demodulator and an LED driver. The PLC modulator is configured to modulate dimming data onto a DC supply signal (V_{IN}) for the purpose of obtaining a modulated DC supply signal (V_{INMOD}), wherein the dimming data is modulated onto the DC supply signal at a first frequency (f₁). The PLC demodulator is configured to generate a pulse-width modulated (PWM) signal (V_{PWM}) on the basis of the modulated DC supply signal. The PWM signal V_{PWM} has a second frequency (f₂) which is at least a factor of 2 greater than the first frequency f₁. The PWM signal V_{PWM} has a duty cycle which is a function of the dimming data in the modulated supply signal (V_{INMOD}). The LED driver 300 is configured to control one or more LEDs 400 with an LED supply signal (I_{L}) which is a function of the PWM signal (V_{PWM}). The PLC demodulator is configured to sample the modulated DC supply signal at successive points in time (t_{S1,} t_{S2}, and so on) which are correlated to the PWM signal (V_{PWM}) for the purpose of obtaining successive measurement values which are representative of the modulated supply signal (V_{INMOD}).

The invention is based inter alia on the insight of the inventors that the modulated supply signal V_{INMOD} has "noise" components which are mainly the result of the switching on and off of the one or more LEDs, i.e. the modulated supply signal comprises a noise signal which "follows" the PWM signal. Because the sampling is performed at points in time which are correlated to the PWM signal, a good demodulation result can still be obtained despite the "noise components".

Advantageous embodiments of the invention are described in the dependent claims.

In an advantageous embodiment the PLC demodulator is configured to sample the modulated DC supply signal at a sampling frequency (f_{S}) which is greater than the first frequency (f₁). The sampling frequency (f_{S}) is preferably equal to or a factor smaller than the second frequency (f₂). The sampling frequency (f_{S}) is preferably at least a factor of 2 greater than the first frequency (f₁). It is possible in this way to ensure on the one hand that sufficient sampling takes place, and on the other hand that the noise signal is "followed", in the sense that sampling always takes place at the same moment in the period of the noise component. Although it is also possible to use sampling frequencies which are higher than the second frequency (f₂), for instance f_{S}= 2f₂, controlling thereof will be more complex because for determined PWM signals sampling will then be performed at both a high level and a low level of the noise component.

The sampling moments are preferably set such that they correspond to the start of a period of a PWM signal, i.e. the start of the on-mode of the one or more LEDs (for instance between 0.01 and 0.1 T₂, wherein T₂ = 1/f₂); or to the end of a period of the PWM signal, i.e. the end of the off-mode of the one or more LEDs (for instance between 0.90 and 0.99 T₂). In this way the sampling at a moment that the noise component changes from a low to a high level or vice versa can be limited. In a possible embodiment the sampling moments can be a function of the duty cycle of the PWM signal. It is possible in this way to avoid sampling taking place at a moment that the noise component changes from a low to a high level or vice versa.

According to an advantageous embodiment, the PLC demodulator is configured to determine at least one reference level, preferably a high reference level and/or a low reference level, on the basis of a number of the successive measurement values. If the difference between the high reference level and the low reference level is known, it suffices to determine only a high reference level or only a low reference level. Both can however be determined in order to increase accuracy. If more than two voltage levels are used in the modulated supply signal, it is of course also possible to determine a plurality of reference levels. The PLC demodulator is further configured to take into consideration this at least one reference level for the purpose of deriving the dimming data from the successive measurement values.

In an advantageous embodiment the PLC demodulator is configured to determine when a generated PWM signal differs from a PWM signal generated before it. The PLC demodulator can further be configured to determine the at least one reference level each time a new PWM signal is generated. A reset of the sampling process thus takes place each time a new PWM signal is generated.

In an advantageous embodiment the LED driver is a constant current source controllable by the PWM signal. Such LED drivers are known to the skilled person and can be embodied in many different ways. In a possible embodiment the LED supply signal generated by the LED driver preferably has in an on-mode of the one or more LEDs a third frequency (f₃) which is at least a factor of 10 greater than the second frequency (f₂). In this way the third frequency (f₃) will further have no noticeable influence on the accuracy of the demodulation. According to another variant, the LED driver is a DC LED driver which switches the one or more LEDs on and off and has no AC component in the on-mode.

According to a possible embodiment, the DC supply signal is a DC voltage. This DC voltage preferably lies between 40 V and 60 V, still more preferably between 45 V and 50 V, and is most preferably about 48 V. According to another variant, the DC voltage can lie between 20 V and 30 V, preferably between 22 V and 26 V. A voltage between 40 V and 60 V has the advantage that the voltage which is present at the input of the LED driver is sufficiently low to be safe, but can still transmit sufficient power.

According to a possible embodiment, the PLC modulator is configured to provide a modulated supply voltage at an output, wherein the modulation consists of a voltage increase or decrease, preferably a voltage increase or decrease of 1 V to 10 V, more preferably 2 V to 6 V.

In an advantageous embodiment the PLC modulator comprises a first input and a second input between which the DC supply signal can be applied, one or more dimming inputs for a dimming signal and/or a wireless receiver for receiving a dimming signal, and an output. These one or more dimming inputs are intended for one or more types of dimmer. In this way the PLC modulator can allow dimming signals of different types of dimmer to be received and/or dimming signals to be received wirelessly, and can thus be employed in polyvalent manner.

In a possible embodiment of the PLC modulator an FET transistor is connected between the first input and the output, such that the current flows from the first input, through the drain-source channel of the FET transistor and to the output. The PLC modulator further preferably comprises a microcontroller configured to convert the dimming data into an analog control signal. The microcontroller is then preferably connected to the gate of the FET transistor such that the analog control signal is able to pull down the voltage at the output on the basis of the value of the analog control signal. When the PLC modulator comprises a plurality of dimming inputs which are intended for being coupled to different types of dimmer, and are thus able to receive different types of dimming signal, then the microcontroller is preferably configured to convert these different types of dimming signal into the analog control signal.

In an advantageous embodiment the PLC demodulator comprises an opamp in buffer mode, an analog-to-digital converter and a processor. The opamp in buffer mode is connected to transmit the modulated supply signal to the analog-to-digital converter. The analog-to-digital converter is configured to sample the transmitted modulated DC supply signal at successive points in time for the purpose of obtaining successive measurement values which are representative of the modulated DC supply signal for the purpose of converting them into digital values and for the purpose of transmitting the digital values to the processor. The processor is configured on the one hand to derive the dimming data from the digital values of the analog-to-digital converter and to generate a PWM signal on the basis thereof; and on the other hand to control the sampling moments of the analog-to-digital converter in correlation with the PWM signal. The processor can further be configured to filter the digital values in order to remove peaks (glitches) and/or in order to perform corrections (such as corrections subject to eye sensitivity).

According to another aspect of the invention, a PLC modulator is provided for use in a dimming system. The PLC modulator has a first input and a second input between which a DC supply voltage can be applied, one or more dimming inputs for receiving a dimming signal from a dimmer and/or a wireless receiver configured to receive a dimming signal, and an output. An FET transistor is connected between the first input and the output such that the current flows from the first input, through the source-drain channel of the FET transistor and to the output. The PLC modulator preferably comprises a microcontroller which is configured to convert the dimming data into an analog control signal. The microcontroller is then preferably connected to the gate of the FET transistor such that the analog control signal is able to pull down the voltage at the output on the basis of the value of the analog control signal. Although such a PLC modulator is preferred for use in a dimming system of the type described in the preamble, the skilled person will appreciate that other PLC modulators can also be used in the above described dimming systems.

The above described first and second frequencies f₁, f₂ preferably lie within the following ranges:
- f₁ between 100 Hz and 500 Hz;
- f₂ between 1 kHz and 5 kHz.
For the LED driver use can be made of an LED driver with a third frequency, wherein f₃ preferably lies between 100 kHz and 500 kHz, or a DC LED driver can be used as described above.

### Brief description of the figures

The above stated and other advantageous features and objects of the invention will become more apparent, and the invention better understood, on the basis of the following detailed description when read in combination with the accompanying drawings, in which:
Figure 1 shows schematically a first embodiment of a dimming system;
Figure 2 shows schematically an embodiment of the PLC modulation side of a dimming system according to the invention;
Figure 3 shows schematically an embodiment of the PLC demodulation side of a dimming system according to the invention;
Figure 4 shows a schematic graph of the modulated supply voltage V_{INMOD} in a possible embodiment of a dimming system according to the invention;
Figure 5 shows a schematic graph of the modulated supply voltage V'_{INMOD} at the input of an analog-to-digital converter in a possible embodiment of a dimming system, wherein successive sampling moments are indicated;
Figure 6 shows a schematic graph of the modulated supply voltage V'_{INMOD} at the input of an analog-to-digital converter in another possible embodiment of a dimming system, wherein successive sampling moments are indicated;
Figure 7 shows schematically a possible embodiment of an LED driver of the dimming system of figure 1;
Figure 8 shows a schematic graph of successive measurement values which are representative of the modulated supply voltage in a possible embodiment of a dimming system according to the invention;
Figure 9 shows schematically another variant of a PLC modulator for use in a dimming system according to the invention; and
Figure 10 shows another variant of a possible embodiment of an LED driver for use in a dimming system according to the invention.

### Detailed embodiments

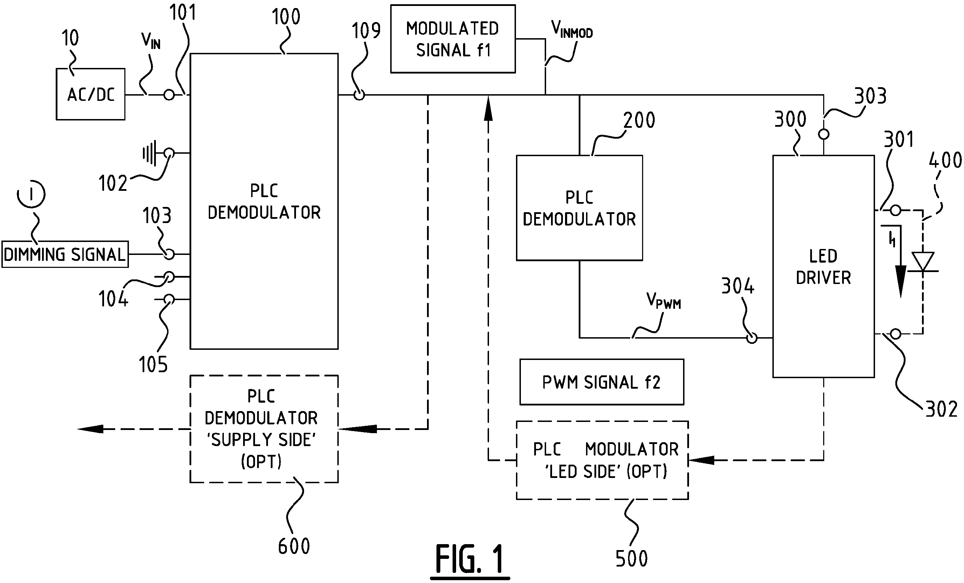

A first embodiment of a dimming system is illustrated in figure 1. Figure 1 shows a diagram of a dimming system for one or more LEDs 400 with a PLC modulator 100, a PLC demodulator 200 and an LED driver 300.

PLC modulator 100 is configured to modulate dimming data D onto a DC supply voltage, here a direct voltage V_{IN}, for the purpose of obtaining a modulated DC supply signal, here a modulated voltage V_{INMOD}, at an output 109 of PLC modulator 100. The data D are modulated onto the DC supply signal V_{IN} at a first frequency f₁, see the modulated supply voltage V_{INMOD} at output 109. PLC modulator 100 further has a first input 101 and a second input 102 between which the DC supply signal V_{IN} can be applied, and one or more dimming inputs 103, 104, 105, and so on for a dimming signal. In a possible embodiment PLC modulator 100 can further comprise a wireless receiver (not shown) for wirelessly receiving data, for instance dimming data from another device, for instance a mobile device such as a smartphone.

PLC modulator 100 is preferably not only configured to modulate dimming data onto the DC supply signal, but can also modulate other data onto the supply signal. This can for instance be wirelessly received data. The received data can be dimming data but can also be other data. Examples of other digital data which can be modulated onto the supply signal are for instance address data for identifying an LED or LED driver. It can be useful, particularly when a plurality of LED drivers is provided, to allocate an address to the LED drivers. Dimming data can then be intended for one or more LED drivers with a determined address. Still other data which can be modulated onto the supply signal are commands, for instance a reset command for resetting an address, commands intended for all LED drivers, and so on.

PLC demodulator 200 is configured to generate a pulse-width modulated (PWM) signal V_{PWM} on the basis of the modulated DC supply signal V_{INMOD}. The PWM signal V_{PWM} has a second frequency f₂ and a duty cycle which is a function of the dimming data D in the modulated supply signal V_{INMOD}. The second frequency f₂ is at least a factor of 2 greater than the first frequency f₁, and preferably at least a factor of 4 greater than the first frequency f₁. The DC supply signal V_{IN} is preferably a DC voltage between 40 V and 60 V, still more preferably between 45 V and 50 V, and most preferably about 48 V. In this way the level of the voltage which is present at the input of the LED driver is sufficiently low to be safe, and sufficient power can still be transmitted. The voltage difference between a high and a low level in the modulated supply voltage V_{INMOD} preferably lies in a range of between 1 V and 10 V, still more preferably between 2 V and 6 V.

The dimming system can further comprise an AC/DC converter 10 for converting an alternating voltage, for instance the mains voltage, into the direct voltage V_{IN}, for instance a 48 V direct voltage.

Different LEDs 400 can be connected in parallel or in series between first output 301 and second output 302 of LED driver 300.

LED driver 300 and LED(s) 400 can be formed as integrated modules in which both are incorporated. It is however also possible to provide LED driver 300 and LED(s) 400 as separate units.

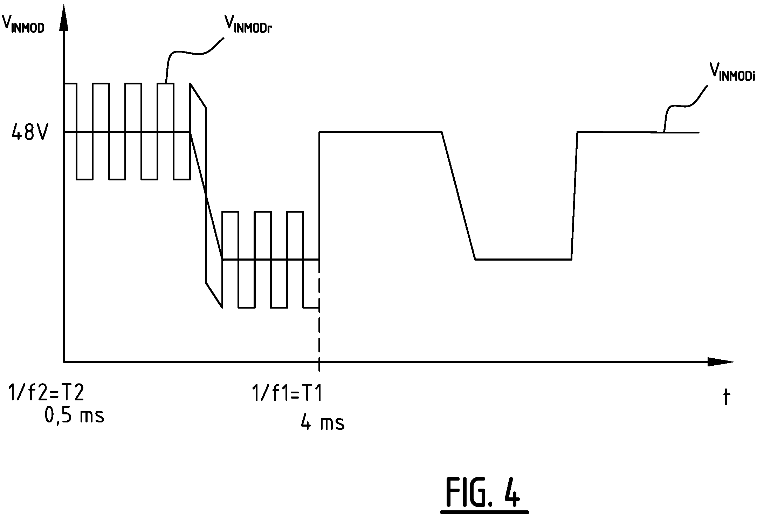

LED driver 300 is configured to control one or more LEDs 400 with an LED supply signal I_{L} which is a function of PWM signal V_{PWM}. PLC demodulator 200 is configured to sample the modulated DC supply signal V_{INMOD} at successive points in time (t_{S1}, t_{S2}, and so on) which are correlated to the PWM signal V_{PWM} for the purpose of obtaining successive measurement values which are representative of the modulated supply signal V_{INMOD}. PLC demodulator 200 is configured to sample the modulated DC supply signal at a sampling frequency f_{S} which is greater than the first frequency f₁ and which is equal to or a factor smaller than the second frequency f₂. This is illustrated in figures 4, 5 and 6 and will be discussed in more detail hereinbelow.

Instead of one LED driver 300 with one or more LEDs 400 it is also possible for a number of LED drivers 300 with associated one or more LEDs to be provided in parallel, wherein they can be controlled via a shared PLC demodulator 200.

In addition, it is also possible to provide a plurality of PLC demodulators 200, which each receive V_{INMOD} at their input and generate a PWM signal for an associated LED driver 300, in parallel.

It is further possible to provide an optional PLC modulator 500 on the LED driver side and to then provide an associated PLC demodulator on the supply side. In this way digital dimming data which is available on the LED side can be modulated onto the supply signal and thus be transmitted to the supply side, where the data is extracted from the modulated signal. Such techniques are known and, as a result, will not be described in detail here.

PLC modulator 100 can further be configured to perform a calibration, for instance when the dimming system is first taken into use. PLC modulator 100 can more particularly be configured to measure input voltage V_{IN} and output voltage V_{INMOD}, and to adjust the settings of PLC modulator 100 for the purpose of obtaining the desired voltage levels of V_{IN} and V_{INMOD}.

Figure 4 shows a modulated direct voltage V_{INMOD}. In the shown example V_{IN} = 48 V, f₁ = 250 Hz and f₂ = 2 kHz. Without the noise components the modulated direct voltage would look like V_{INMODi}, here a signal onto which for instance a bit 1 is modulated twice (the downward flank indicates a bit value 1). As a result of the switching on and off of the LED(s) 400 the modulated direct voltage in practice however has noise components which follow the frequency f₂ of the PWM signal, see V_{INMODr}.

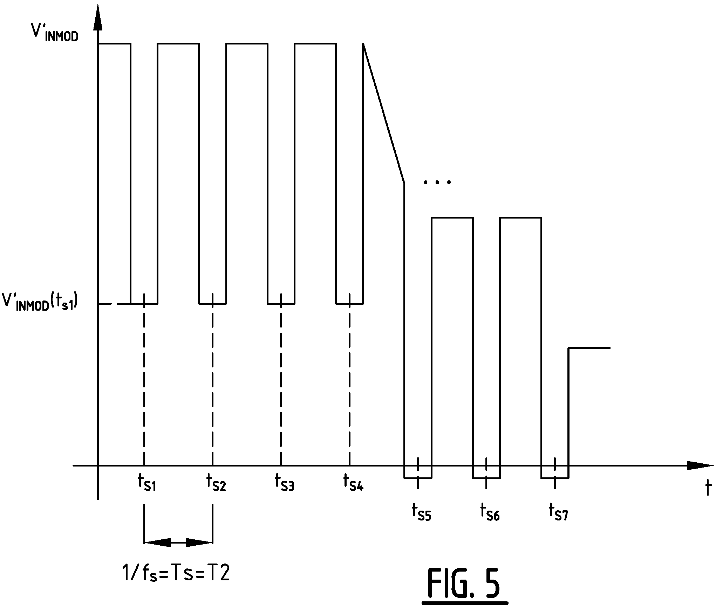

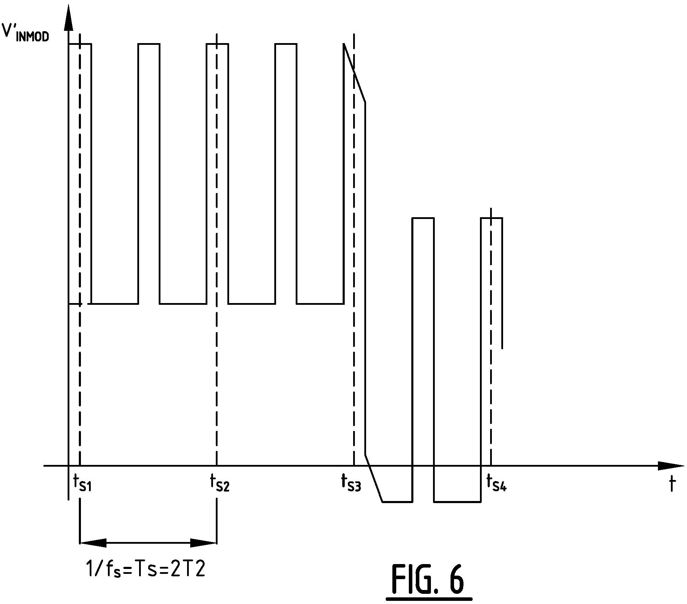

Figures 5 and 6 show possible sampling moments. In the example of figure 5 the sampling frequency is the same as the second frequency and the sampling moments t_{S1}, t_{S2}, and so on are chosen such that they always lie in a lower zone of the "noise component". In the example of figure 6 the sampling frequency is a factor of 2 smaller than the second frequency and the sampling moments t_{S1}, t_{S2}, and so on are chosen such that they always lie in an upper zone of the "noise component". The sampling moments (t_{S1}, t_{S2}, and so on) can further be a function of the duty cycle of the PWM signal, such that it is avoided that the sampling moments coincide with a transition from a low to a high value as a result of the noise components.

PLC demodulator 200 is further configured to determine at least one reference level, preferably a high reference level and/or a low reference level, on the basis of a number of the successive measurement values (V'_{INMOD}(t_{S1}), V'_{INMOD}(t_{S2}), and so on). In figure 5 the measurement values at t_{S1,} t_{S2}, t_{S3}, t_{S4} can for instance be used to determine a high reference level, and the measurement values at t_{S5}, t_{S6}, t_{S7}, t_{S8} can be used to determine a low reference level. This high and/or low reference level can then be used when deriving the dimming data (D) from the successive measurement values. This at least one reference value can be continuously determined on the basis of a predetermined number of measurement values and can then be continuously adjusted in the case of changes. In this way the accuracy of the demodulation is further improved.

PLC demodulator 200 is preferably configured to determine when a generated PWM signal differs from a previously generated PWM signal and to correspondingly adjust the successive points in time at which sampling takes place. When the duty cycle of a PWM signal for instance changes from 10% to 90%, the sampling position within a noise period T₂ can be adjusted such that it does not lie too close to a high-low transition of the noise component.

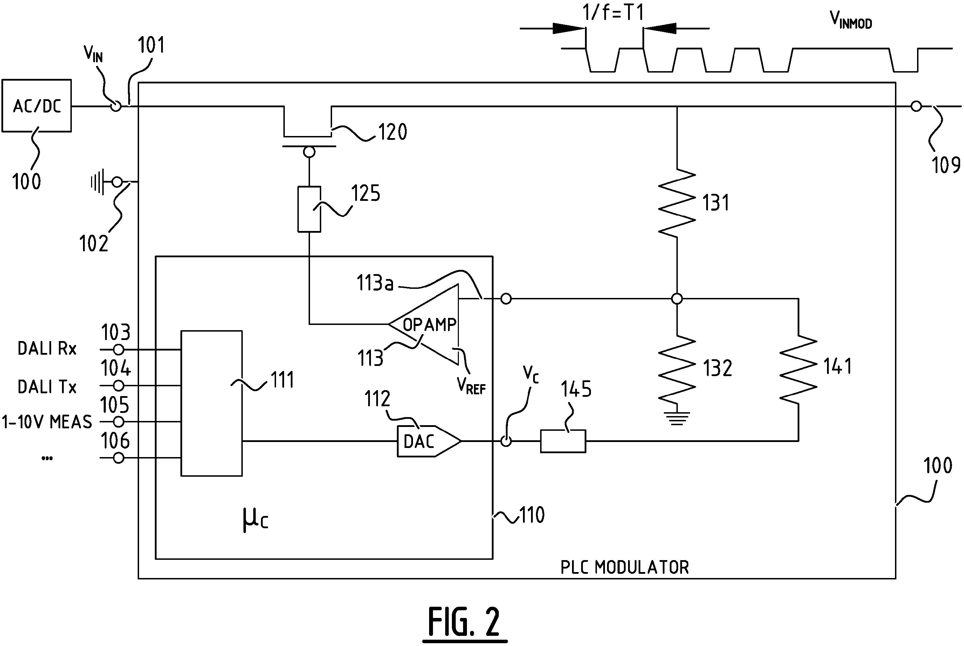

Figure 2 shows an embodiment of the modulation side of the dimming system in detail. An FET transistor 120 is connected between first input 101 and output 109 of PLC modulator 100, such that current flows from first input 101, through the source-drain channel of FET transistor 120 and to output 109. PLC modulator 100 comprises a microcontroller 110 with a DAC 112. Microcontroller 110 is configured to convert the dimming data D into an analog control signal V_{C} via a conversion block 111 and the DAC 112. Microcontroller 110 is connected to the gate of FET transistor 102 such that the analog control signal V_{C} is able to pull down the voltage at output 109 on the basis of the value of analog control signal V_{C}. In the illustrated embodiment the output of the DAC 112 is connected by means of a buffer opamp 145 and a resistor 141 to an input 113a of an opamp 113. A reference voltage V_{REF} is applied at the other input of opamp 113. Input 113a is further connected to a voltage divider formed by resistors 131, 132 which are connected between output 109 and the earth. The output of opamp 113 is connected via a gate driver circuit 125 to the gate of the FET 120. Because of such a circuit, the voltage at input 113a of the opamp will increase when the voltage V_{C} increases, whereby FET 120 closes further and the voltage at output 109 decreases.

PLC modulator 100 comprises a plurality of dimming inputs 103, 104, 105, and so on which are configured to receive dimming signals from different types of dimmer, and microcontroller 110 is configured to convert dimming signals from different types of dimmer via conversion block 111 into a digital signal which is converted into the analog control signal V_{C} by the DAC 112. The multiple types of dimmer can comprise one or more of the following types of dimmer: a 0/1-10 V dimmer, a PWM (Pulse Width Modulation) dimmer, a DALI (Digital Addressable Lighting Interface) dimmer, a Phase Control dimmer (such as a TRIAC or SCR dimmer), a push button dimmer configured to generate a dimming signal which is a function of the amount of time the push button is pushed for. In a 0/1-10 V dimmer the dimming signal is a voltage which is proportional to the desired dimming. In addition, it is also possible to receive the dimming data wirelessly via a wireless receiver in the PLC modulator, wherein a user for instance transmits the dimming data to the wireless receiver via a smart phone.

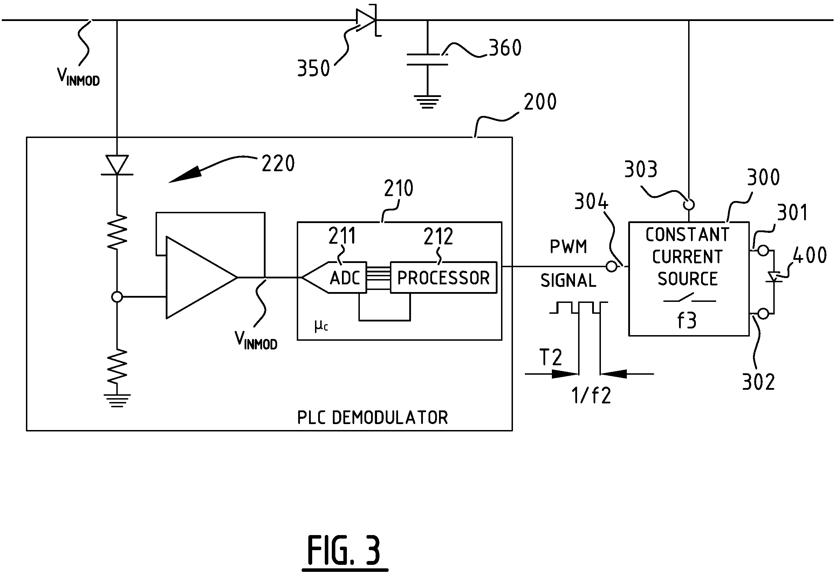

Figure 3 shows an embodiment of the demodulation side of the dimming system in detail. The LED driver 300 is here a constant current source controllable by the PWM signal. In an on-mode of the one or more LEDs 400 the LED supply signal I_{L} preferably has a frequency f₃ which is at least a factor of 10 greater than the second frequency f₂. The third frequency f₃ is for instance 250 kHz. The PLC demodulator 200 comprises an opamp 220 in buffer mode, an analog-to-digital converter 211 and a processor 212. The opamp 220 in buffer mode is connected to transmit the modulated supply signal V_{INMOD} to the analog-to-digital converter 211. The analog-to-digital converter (ADC) 211, for instance a 12-bit ADC, is configured to sample the transmitted modulated DC supply signal V'_{INMOD} at successive points in time (t_{S1}, t_{S2}, and so on) for the purpose of obtaining successive measurement values (V'_{INMOD}(t_{S1}), V'_{INMOD}(t_{S2}), and so on) which are representative of the modulated DC supply signal V_{INMOD} for the purpose of converting them into digital values and for the purpose of transmitting the digital values to processor 212. Processor 212 is configured on the one hand to derive the dimming data from the digital values of the analog-to-digital converter and to generate a PWM signal on the basis thereof; and on the other hand to control the sampling moments of analog-to-digital converter 211 in correlation with the PWM signal. Processor 212 can further be configured to filter the digital values in order to remove peaks (glitches) and/or in order to perform corrections (such as corrections subject to eye sensitivity).

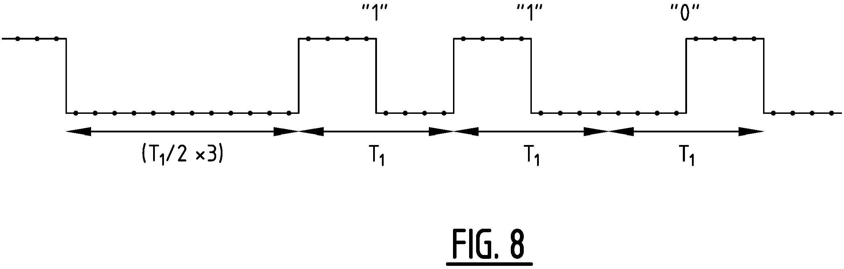

Figure 8 illustrates the processing of the digital measurement values in processor 212. In processor 212 it will first be determined for the sampled measurement values whether these measurement values represent a low or a high level. A succession of high and low values at subsequent sampling moments is drawn in figure 8 using dots. In order to indicate that dimming data will be transmitted a predetermined start signal is first transmitted. In the example of figure 8 this is a low level during a period (T₁/2 x 3). In the illustrated example this corresponds to 12 low values. In addition, the duration of the period T₁ is also transmitted to processor 212. Processor 212 can then derive the bit values on the basis of these data. In the illustrated example a downward flank in the middle of a period T₁ corresponds to a bit value "1", and an upward flank in the middle of a period T₁ corresponds to a bit value "0". In this way processor 212 can thus determine a succession of bit values and derive a PWM signal therefrom.

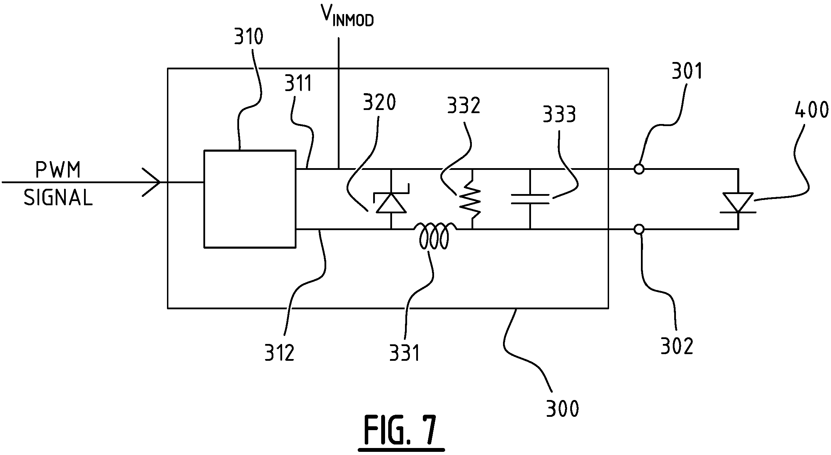

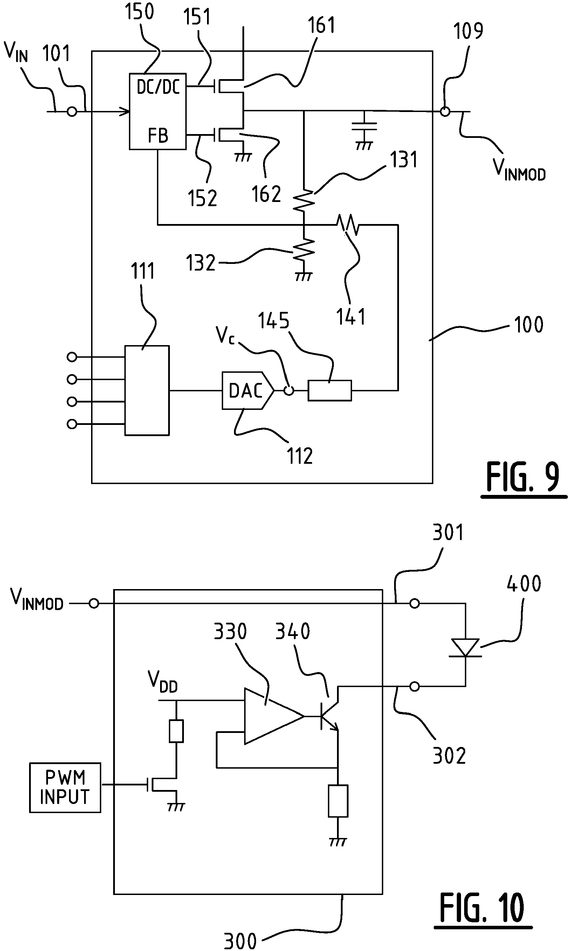

Figure 7 shows a possible embodiment of an LED driver 300. LED driver 300 comprises a constant current buck LED driver block 310, for instance an LED driver block of the type LM3414, a diode 320, a coil 331, a resistor 332 and a capacitor 333. Resistor 332 and capacitor 333 are connected in parallel between output terminals 301, 302 of LED driver 300. The current of LED driver block 310 runs via a coil 331 to output pin 302. The modulated supply voltage V_{INMOD} is connected to the first output pin 301. Diode 320 is for instance a Schottky diode through which current can flow back from coil 331 during switching. The skilled person will appreciate that many other LED drivers can likewise be used in a dimming system according to the invention. Figure 10 thus shows another possible LED driver 300 wherein a PWM signal is converted by means of an opamp 330 into a control signal for a transistor 340 which is provided in series with the one or more LEDs 400. In the variant of figure 10 LED driver 300 is thus a DC LED driver which does not have an AC component in the on-mode.

Figure 9 illustrates yet another variant of a PLC modulator 100 for use in a dimming system according to the invention. PLC modulator 100 comprises a number of components which are similar to the ones described above for figure 2, and these components are designated with the same reference numerals. In this embodiment use is not made of an FET 120 which is coupled between input 101 and output 109. This FET has here been replaced with a DC/DC converter 150 which is controlled on the basis of the voltage V_{C} at the output of the DAC 112. Two outputs 151, 152 of DC/DC converter 150 are connected to the gates of respectively a first FET 161 and a second FET 162, which are connected in series. V_{C} will determine the voltage at outputs 151, 152, and can thus modulate the voltage V_{INMOD} at output 109.

The skilled person will appreciate that the invention is not limited to the above described embodiments and that many modifications and variants are possible within the scope of the invention, which is defined solely by the following claims.

## Claims

1. Dimming system comprising:
a PLC modulator (100) configured to modulate dimming data (D) onto a DC supply signal (V_{IN}) for the purpose of obtaining a modulated DC supply signal (V_{INMOD}), wherein the dimming data are modulated onto the DC supply signal (V_{IN}) at a first frequency (f₁);
a PLC demodulator (200) configured to generate a pulse-width modulated (PWM) signal (V_{PWM}) on the basis of the modulated DC supply signal (V_{INMOD}); wherein
the PWM signal (V_{PWM}) has a second frequency (f₂) and the duty cycle is a function of the dimming data (D) in the modulated supply signal (V_{INMOD}); which second frequency (f₂) is at least a factor of 2 greater than the first frequency (f₁);
an LED driver (300) configured to control one or more LEDs (400) with an LED supply signal (I_{L}) which is a function of the PWM signal (V_{PWM}); wherein the PLC demodulator (200) is configured to sample the modulated DC supply signal (V_{INMOD}) at successive points in time (t_{S1}, t_{S2}, and so on) which are correlated to the PWM signal (V_{PWM}) for the purpose of obtaining successive measurement values which are representative of the modulated supply signal (V_{INMOD}).

2. Dimming system according to claim 1, wherein the PLC demodulator (200) is configured to sample the modulated DC supply signal at a sampling frequency (f_{S}) which is greater than the first frequency (f₁) and which is equal to or a factor smaller than the second frequency (f₂).

3. Dimming system according to claim 1 or 2, wherein the PLC modulator is configured to set the sampling moments (t_{S1}, t_{S2} and so on) such that they correspond to the start of a period of the PWM signal, preferably between 0.01 and 0.1 T₂, wherein T₂ = 1/f₂; or to the end of a period of the PWM signal, preferably between 0.90 and 0.99 T₂.

4. Dimming system according to any of the foregoing claims, wherein the PLC demodulator (200) is configured to determine at least one reference level, preferably a high reference level and/or a low reference level, on the basis of a number of the successive measurement values (V'_{INMOD}(t_{S1}), V'_{INMOD}(t_{S2}), and so on), and to take into consideration this at least one reference level for deriving the dimming data (D) from the successive measurement values.

5. Dimming system according to the foregoing claim, wherein the PLC demodulator (200) is configured to determine the at least one reference level each time a new PWM signal is generated.

6. Dimming system according to any of the foregoing claims, wherein the LED driver (300) is a constant current source controllable by the PWM signal.

7. Dimming system according to any of the foregoing claims, wherein the LED supply signal (IL) has in an on-mode of the one or more LEDs a frequency (f₃) which is at least a factor of 10 greater than the second frequency (f₂).

8. Dimming system according to any of the foregoing claims, wherein the DC supply signal (V_{IN}) is a DC voltage, preferably a DC voltage between 40 V and 60 V, still more preferably between 45 V and 50 V, and most preferably about 48 V.

9. Dimming system according to any of the foregoing claims, wherein the PLC modulator (100) further has a first input (101) and a second input (102) between which the DC supply signal (V_{IN}) can be applied, one or more dimming inputs (103, 104, 105, and so on) for a dimming signal, and an output (109).

10. Dimming system according to the foregoing claim, wherein an FET transistor is connected between the first input and the output, such that current flows from the first input, through the source-drain channel of the FET transistor and to the output.

11. Dimming system according to any of the foregoing claims, wherein the PLC modulator (100) comprises a microcontroller (110); wherein the microcontroller (110) is configured to convert the dimming data (D) into an analog control signal (Vc).

12. Dimming system according to claims 10 and 11, wherein the microcontroller (110) is connected to the gate of the FET transistor such that the analog control signal is able to pull down the voltage at the output on the basis of the value of the analog control signal (Vc).

13. Dimming system according to any of the claims 11-12, wherein the PLC modulator (100) comprises a plurality of dimming inputs (103, 104, 105, and so on) which are configured to receive dimming signals from different types of dimmer and/or comprises a wireless receiver for wirelessly receiving a dimming signal, and the microcontroller (110) is configured to convert dimming signals from different types of dimmer into the analog control signal.

14. Dimming system according to the foregoing claim, wherein the dimming data comes from one of the following: a 0/1-10 V dimmer, a PWM (Pulse Width Modulation) dimmer, a DALI (Digital Addressable Lighting Interface) dimmer, a Phase Control dimmer (such as a TRIAC or SCR dimmer), a push button dimmer configured to generate a dimming signal which is a function of the amount of time the push button is pushed for, a wireless receiver.

15. Dimming system according to any of the foregoing claims, wherein the PLC demodulator (200) comprises an opamp (220) in buffer mode, an analog-to-digital converter (211) and a processor (212); wherein the opamp (220) in buffer mode is connected to transmit the modulated supply signal (V_{INMOD}) to the analog-to-digital converter (211); and wherein the analog-to-digital converter (211) is configured to sample the transmitted modulated DC supply signal (V'_{INMOD}) at successive points in time (t_{S1}, t_{S2}, and so on) for the purpose of obtaining successive measurement values (V'_{INMOD}(t_{S1}), V'_{INMOD}(t_{S2}), and so on) which are representative of the modulated DC supply signal (V_{INMOD}) for the purpose of converting them into digital values and for the purpose of transmitting the digital values to the processor (212), wherein the processor (212) is configured to control the sampling moments of the analog-to-digital converter (211) in correlation with the PWM signal.
